Europäisches Patentamt

**European Patent Office**

Office européen des brevets

(11) Publication number : **0 102 592 B2**

# NEW EUROPEAN PATENT SPECIFICATION

(45) Date of publication of the new patent
specification : **21.10.92 Bulletin 92/43**

(21) Application number : **83108391.0**

(22) Date of filing : **25.08.83**

(51) Int. Cl.⁵ : **A61B 6/00, H04N 5/32**

(54) **X-ray image producing system.**

The file contains technical information
submitted after the application was filed and
not included in this specification

(30) Priority : **27.08.82 JP 149783/82**
**27.08.82 JP 149784/82**

(43) Date of publication of application :
**14.03.84 Bulletin 84/11**

(45) Publication of the grant of the patent :
**28.10.87 Bulletin 87/44**

(45) Mention of the opposition decision :
**21.10.92 Bulletin 92/43**

(84) Designated Contracting States :
**DE FR GB NL**

(56) References cited :
**EP-A- 0 037 722**
**EP-A- 0 055 655**
**EP-A- 0 066 008**
**EP-A- 0 082 771**
**DE-A- 3 007 620**

(56) References cited :
**DE-C- 3 018 129**
**FR-A- 1 541 671**
**GB-A- 2 018 100**
**GB-A- 2 062 403**
**US-A- 4 359 759**
**Principles of Diagnostic X-Ray Apparatus,**
**published by Philips Medical Systems Ltd.,**
**London First Edition 1973, pp. P6 and P7**

(73) Proprietor : **SHIMADZU CORPORATION**
**378, Ichinofunairi-cho Kawaramachi-dori Nijo**
**Sagaru**
**Nakagyo-ku Kyoto 604 (JP)**

(72) Inventor : **Nakanishi, Takeshi**
**1-53 Uzumasa Sujaku-cho**
**Ukyo-ku Kyoto (JP)**
Inventor : **Nishioka, Hiroyuki**
**11-304, 2-13 Enmyoji Kitaura Ooyamazaki-cho**
**Otokuni-gun Kyoto (JP)**

(74) Representative : **Grupe, Peter, Dipl.-Ing. et al**
**Patentanwaltsbüro**
**Tiedtke-Bühling-Kinne-Grupe-Pellmann-Grams-Struif**
**Bavariaring 4**
**W-8000 München 2 (DE)**

EP 0 102 592 B2

Jouve, 18, rue Saint-Denis, 75001 PARIS

## Description

Background of the invention

This invention relates generally to radiography and more particularly to an X-ray image producing apparatus incorporated in a TV system.

When a shadow image of an object irradiated by X-rays in an X-ray TV system is stored in a picture memory, the reproduced image is coarse and of low quality. This is because the object is given a relatively small X-ray dose, so that the image is substantially disturbed by the quantum noise of X-rays. The situation may be compared to that in which an underexposed photograph is taken in a conventional optical camera. In optical cameras it is easy to obtain an amount of light necessary for a proper exposure and it is quite rare to be unable to increase the amount of light. In diagnostic radiography, however, if the amount of X-rays for exposure is increased, the patient will receive a higher radiation dose, which must be avoided from the medical point of view. Therefore, practically radiographs are always underexposed.

Accordingly, it is one subject of the invention to provide an apparatus for recording X-ray shadow images, in which the influence by X-ray quantum noise is substantially reduced when the intensity of X-ray available is not sufficient for proper exposure, so that a shadow image of high quality can be obtained.

One of the most important and useful applications of radiography is diagnosis of diseases, and there have been developed various radio-graphical techniques, among which the digital subtraction technique has recently made a marked technical advance in its application to angiography. In the digital subtraction technique, a video processor is used to convert on real-time basis the video signal to digital signals, so that subtraction is conducted to produce a subtraction image. In the digital subtraction technique the resolution is remarkably improved in comparison with the conventional subtraction technique employing photographic films, so that it becomes possible to make diagnosis with angiographs obtained with contrast material injected intravenously. Since the digital subtraction technique makes angiography easier to conduct, it is possible to obtain angiograms on a TV screen. This certainly is a great advantage.

Earlier European application EP-A2-82 771, which is considered to be comprised in the state of the art according to Article 54 (3) and (4) EPC, discloses an X-ray image producing apparatus comprising means for producing a beam of X-rays to irradiate an object to be examined, means for producing an X-ray shadow image of said object caused by said X-rays that have passed through said object, means for converting said X-ray image to a corresponding video signal, means for storing the level of said video signal in each of the picture elements which constitute a frame, and means for comparing in each of said picture elements the level of said video signal stored in said storing means and the level of succeeding video signal from said converting means which forms a frame succeeding the frame formed by said stored video signals and causing that one of said video signals whose level satisfies a predetermined condition in magnitude relative to the other to be stored in each of the memory sections of said storing means corresponding to said picture elements in place of the data previously recorded therein.

Furthermore, from EP-A1-0 037 722 there is known an X-ray image producing apparatus comprising means for producing a beam of X-rays to irradiate an object to be examined, means for producing an X-ray shadow image of said object caused by said X-rays that have passed through said object; means for converting said X-ray image to a corresponding video signal; and means (12, 14) for storing the level of said video signal in each of the picture elements which constitute at least one frame. X-ray quantum noise is reduced in this apparatus by producing a composite image generated by averaging, additively combining or integrating a plurality of images. In addition, the apparatus described in EP-A1-0 037 722 comprises means for digitizing said converted video signal, means for forming a mask image by averaging the values of said digital video signal obtained during a predetermined period of time in each of the picture elements of said X-ray image produced before injection of contrast material into said object, and storing said mask image, means for forming a live image by averaging the values of said digital video signal obtained during a predetermined period of time in each of the picture elements of said X-ray image produced after injection of contrast material into said object, means for subtracting the digital video signals of said mask image from the digital video signals of said live image, means for converting the digital video signals resulting from said subtraction to a corresponding analog video signal, and means for displaying said converted analog video signal as a subtraction image.

In the digital subtraction technique, in order to reduce the adverse influence of X-ray quantum noise it has been customary to use a radiation dose of much the same level as is used in ordinary direct radiography, with resulting substantial increase in the radiation dose received by the person under examination. The radiation dose to the person must be the minimum required to provide necessary diagnostic information.

Accordingly, another object of the invention is to provide a digital subtraction radiographic system which can produce an X-ray image of high quality with as low a radiation dose as is used for X-ray fluoroscopy by reducing X-ray quantum noise.

The invention will be described in detail with reference to the accompanying drawing.

Brief description of the drawing

Fig. 1 is a block diagram of one embodiment of the invention;

Fig. 2 is a block diagram of another embodiment of the invention; and

Fig. 3 is a waveform diagram for explanation of the principle of operation of the invention.

Summary of the invention

The invention provides an X-ray image producing system, in which a patient to be examined is irradiated so that an X-ray image of the irradiated portion of the patient's body is obtained on the screen of an image intensifier. The X-ray image is converted by a TV camera to a corresponding video signal, which is digitized to provide digital video signals corresponding to the picture elements of the X-ray image. The level of each of the digital video signals corresponding to one of the picture elements in one frame is stored in the corresponding one of the memory sections of a frame memory for comparison with the level of the corresponding one of the digital signals in the next frame so that the lower or higher one of the two levels compared in each of the picture elements is stored in the frame memory for comparison with the level of the corresponding digital signal in the succeeding frame. After a predetermined period of time corresponding to, e.g., 30 frames, the highest or lowest level of the digital video signal in each of the picture elements of the X-ray image has been stored in the frame memory. The digital signals in the memory are read out and converted to a corresponding analog video signal for display of the X-ray image from which the influence by X-ray quantum noise as well as noise inherent in the electronic circuits has been substantially eliminated.

The invention also provides a digital subtraction system, in which both mask and live X-ray images from which the influence by X-ray quantum noise and other noises have been substantially eliminated are formed by using the above-mentioned X-ray image producing system, so that the mask image is subtracted from the live image to produce a subtraction image of high quality.

Description of the preferred embodiments

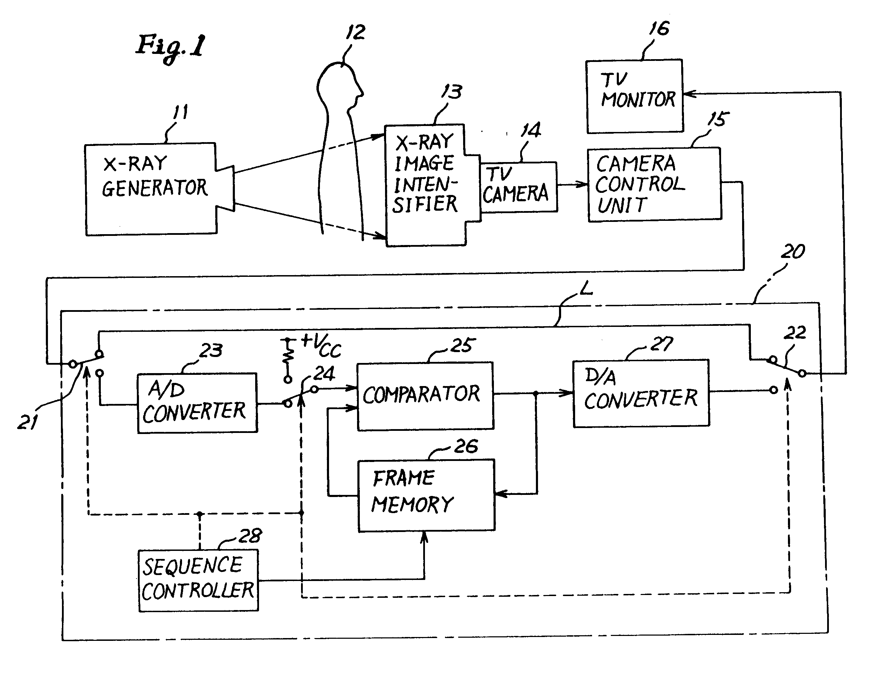

Referring now to the drawing, first to Fig. 1, there is shown an X-ray TV system which comprises an X-ray generator 11, an X-ray image intensifier 13, a TV camera 14, a camera control unit, a video processor 20 and a TV monitor 16.

The X-ray generator 11 projects a beam of X-rays onto a person 12 being examined. As the beam passes through the person, it forms an X-ray shadow image of the irradiated portion of the body of the person 12 in accordance with the X-ray absorption characteristics of the body portion. The image intensifier 13 receives the X-ray image and converts it to a visible optical image, with simultaneous amplification of the brightness of the image. The TV camera 14 is so controlled by the unit 15 as to convert the optical image on the screen of the intensifier 13 to a corresponding video signal, which is transmitted to the TV monitor 16 directly or through the video processor 20.

The video processor 20 comprises an input switch 21, an A/D converter 23, a switch 24, a comparator 25, a frame memory 26, a D/A converter 27, an output switch 22 and a sequence controller 28. The frame memory 26 has a plurality of sections each corresponding to one of the picture elements which constitute a frame.

When the X-ray image is to be displayed on the screen of the monitor 16 in on-line mode just as it is taken by the camera 14, the input and output switches 21 and 22 are so operated that the respective switch arms are kept at the illustrated position, whereupon the video signal from the TV camera 14 is transmitted through a bypass line L connected between the switches 21 and 22 to the TV monitor 16 without any image processing having been conducted.

To record the image taken by the TV camera 14 while observing the image, a knob or the like on a control panel not shown is operated to change from the on-line image display mode to the recorded image display mode, whereupon the sequence controller 28 first initializes all of the memory sections of the frame memory 26 to the maximum value. Upon completion of the initiallization the controller 28 causes the input and output switches 21 and 22 to be changed over to the position opposite to the illustrated position and the switch 24 to the illustrated position, whereupon the video signal from the camera 14 is digitized by the A/D converter 23, so that the digital signals are applied to the comparator 25. On the other hand, the sequence controller 28 causes the frame memory 26 to apply the digital data previously stored in the sections of the frame memory to the comparator 25, in which the digitized video signals from the A/D converter 23 and the digital data read out from the frame memory 26 are compared in each and every one of the picture elements of each frame, so that the smaller one of the two values in each of the picture elements is stored in the corresponding one of the sections in the frame memory 26.

The above operation is repeated for a period of time, say, 1 second, covering a predetermined number of frames, say, 30 frames, set by a suitable device such as a digital switch not shown but provided on the previously mentioned operating panel. When the above period of time has elapsed, the sequence controller 28 causes the input and output switches 21 and 22 to be changed over to the illustrated original position thereby to terminate the recording operation.

In the course of the above recording operation, the digital signals to be successively stored in the frame memory 26 are also applied to the D/A converter 27, which converts them to a corresponding analog signal. The TV monitor 16 receives the analog signal and converts it to a corresponding picture to be displayed on its screen. Each of the sections of the frame memory 26 sufficiently has the same number of bits as the A/D converter 23.

The recorded picture obtained at the end of the above-mentioned recording operation conducted for a period of time covering a plurality of frames (that is, the picture stored in the frame memory 26 at the end of the recording operation) is composed of the digital signals from the A/D converter 23 which have the lowest level attained in each of the picture elements during the period of time for recording.

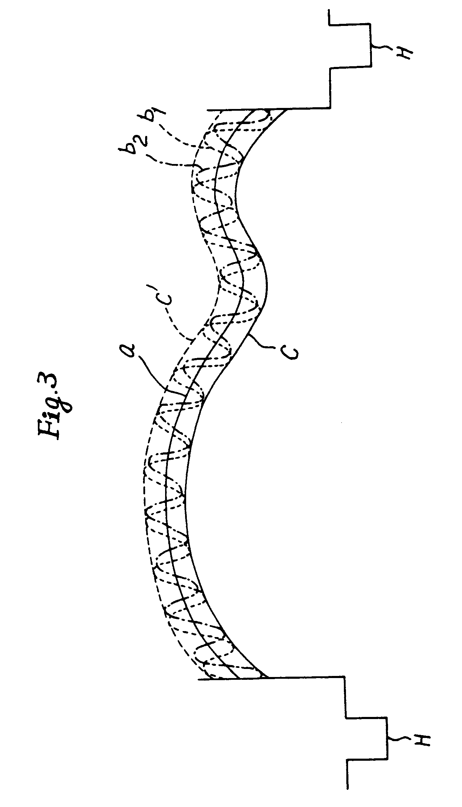

Fig. 3 schematically shows the video signal from the TV camera 14 corresponding to one of the horizontal scanning lines of a frame, with the horizontal synchronizing pulses being designated by H. Due to X-ray quantum noise, the signal $b_1$ fluctuates minutely and at random about what is believed to be the true value or level $a$ of the signal, so that the waveform of the signal $b_1$ contains a number of minute peaks and valleys. Next time the same horizontal line is scanned for the next frame, the video signal fluctuates differently as shown at $b_2$. Thus every time the same line is scanned for successive different frames, the video signal fluctuates differently and at random. This is true with all the other scanning lines of the frames. Therefore, to select the lowest level of the video signal attained in each of the picture elements during the period of time over the predetermined number of frames is to form an envelope $c$ passing through the lowest points of the valleys of the fluctuating curves $b_1$, $b_2$,. . .. The envelope $c$ can be considered as the true value $a$ having been shifted downwardly in parallel. In other words, the video signal corresponding to the true value $a$ has been recorded with X-ray quantum noise having been substantially eliminated. Therefore, by reading out the signal values stored in the frame memory 26 it is possible to display on the screen of the TV monitor 16 an image substantially equivalent to the true image without appreciable influence by X-ray quantum noise. Not only the random X-ray quantum noise but also any random noise in the TV camera system are eliminated in the course of the above-mentioned recording operation.

In the above-mentioned operation the lowest value of the video signal in each of the picture elements are selected. It is possible to select the highest values or peaks of the fluctuating video signal to form an envelope $c'$ shifted upward in parallel with the true value $a$.

In accordance with the invention, by comparing the video signal in each of the picture elements of each of the successive frames which constitute an X-ray shadow image and the video signal in the corresponding one of the picture elements of the succeeding frame, and storing the lowest or highest value of the signal in each of the picture elements, it is possible to make the video signal substantially equivalent to the true signal, that is, to substantially eliminate the adverse influence of X-ray quantum noise thereby to obtain a recorded picture of the X-ray shadow image of a higher quality than the recorded picture obtained by recording the X-ray shadow image in a single frame.

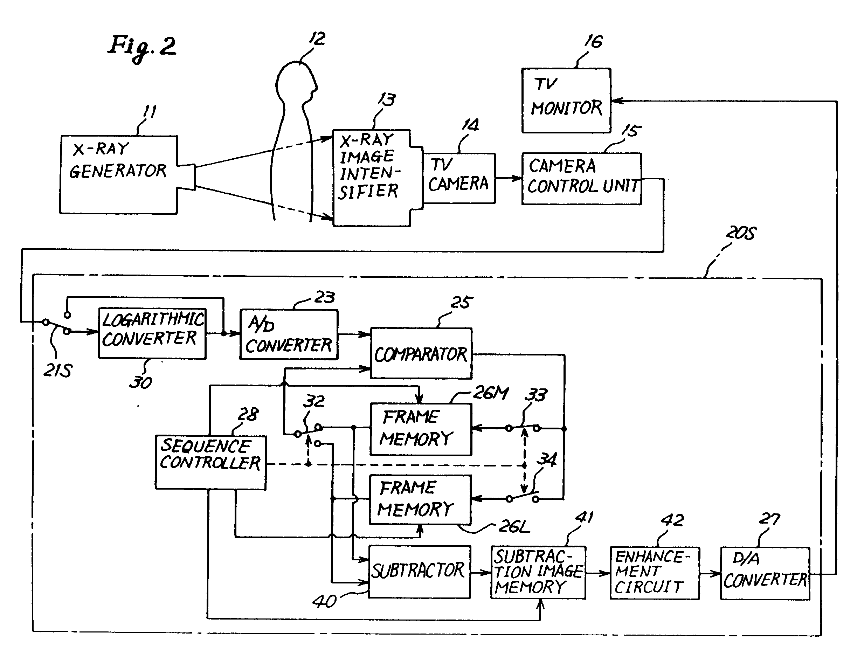

Turning to Fig. 2, there is schematically shown a digital subtraction system constructed in accordance with the invention. In Fig. 2 the same reference numerals as in Fig. 1 designate the corresponding parts or elements so that no explanation will be given to them except when necessary.

The video signal from the TV camera 14 is applied to a video processor 20S, wherein digital subtraction is conducted on the X-ray image taken by the camera 14 in the following manner.

The video processor 20S comprises an input switch 21S, a logarithmic converter 30, an A/D converter 23, a comparator 25, a frame memory 26M for storing the mask image, a frame memory 26L for storing the live image, a subtractor 40, a frame memory 41 for storing the subtraction image, an enhancement circuit 42, a D/A converter 27, a sequence controller 28 and switches 32, 33 and 34 controlled by the controller 28.

The video signal from the camera 14 is applied to the logarithmic converter 30 for logarithmic conversion. This makes it possible to obtain the ratio of the level of the signal caused by the object to the level of the signal caused by the background regardless of the absolute value of the video signal and to obtain a sharp picture of the object such as blood vessels no matter whether or not bones are superimposed on the blood vessels. When it is desired to make the video signal bypass the logarithmic converter 30, the switch 21S is changed over to the side opposite the illustrated position.

The video signal is then digitized by the A/D converter 23. When the sequence controller 28 causes the switch 32 to be closed to the illustrated side and the switch 33 to be closed, the image of the object before injection of contrast material is stored as a mask image in the frame memory 26M, with the comparator 25 and the memory 26M cooperatively functioning as a picture memory of the peak (or bottom) holding type in the same manner as the comparator 25 and the frame memory 26 in the system of Fig. 1.

In particular, the digital video signals from the A/D converter 23 which correspond to each of a predetermined number of frames of the picture and the digital video signals of the immediately preceding one frame stored in and read out from the frame memory 26M are compared by the comparator 25 in each and every one of the picture elements of the frame, so that the smaller or greater one of the two signal values in each of the picture elements is stored in the frame memory 26M. The operation is repeated for a predetermined period of time, e.g., 1 (one) second corresponding to a predetermined number, e.g., 30 frames, whereupon the lowest or highest level of the video signal reached in each of the picture elements during the above-mentioned period of time has been stored in each of the corresponding sections of the frame memory 26M. In other words, the X-ray shadow image of the object under examination before injection of contrast material has been stored in the frame memory 26M as a mask image from which the influence of X-ray quantum noise has been substantially eliminated as previously explained with reference to Fig. 3.

When contrast material is injected into the object under examination, with the controller 28 operating to cause the switch 33 to be opened, the switch 34 to be closed and the switch 32 to be closed at the position opposite the illustrated position, the comparator 25 and the frame memory 26L cooperate to function as a picture memory of the peak holding type in the same manner as mentioned above, so that the peak value of the digital video signal attained in each of the picture elements in each frame during a predetermined period of time, say, 1 (one) second covering 30 frames is stored in the frame memory 26L. In other words, a live image substantially free of X-ray quantum noise has been stored in the frame memory 26L.

The mask image stored in and read out from the frame memory 26M and live image stored in and read out from the frame memory 26L are applied to the subtraction circuit 40, which subtracts the former from the latter image to produce a subtraction image to be written in the subtraction image memory 41 by the instruction from the sequence controller 28.

When the above-mentioned period of time for recording, that is 1 (one) second corresponding to 30 frames has passed, the frame memory 26L is cleared of the live image stored therein so as to be ready for recording a new live image which will be obtained in the next recording period of one second or 30 frames.

In this manner, the live image stored in the frame memory 26L and consequently the subtraction image stored in the memory 41 are renewed upon lapse of every predetermined period of time, that is, one second.

During the above-mentioned period of time before the next new subtraction image is written in the subtraction image memory 41, the subtraction image stored in the memory 41 is read out repeatedly as many times as is necessary to provide the number of frames, say, 30 frames required by the TV monitor 16 for display.

The subtraction image read out from the memory 41 is applied to the enhancement circuit 42, which increases the contrast of the image. The output in digital form from the enhancement circuit 42 is converted by the D/A converter 27 to a corresponding analog signal, which is applied to the TV monitor 16. As is apparent from the foregoing description, the TV monitor 16 displays the subtraction image which is renewed every one second.

In the system of Fig. 2 the person under examination continuously receives as low a radiation dose as in fluoroscopic examination. The mode of operation, however, is similar to ths serial mode since the subtraction image obtained changes at predetermined intervals.

The subtraction technique of the invention requires a relatively low radiation dose to obtain a subtraction image of high quality and can be operated with not only intravenous but also intra-arterial injection of contrast agent. In the intra-arterial injection method, a smaller radiation dose to the patient than is required for radiography with photographic films suffices for a subtraction image of higher quality to be obtained. In this method, although the injected contrast agent moves through the artery, the peak holding effect the system of the invention has on the area where the injected contrast agent exists enables a relatively small amount of contrast agent to produce a subtraction image with sharp contrast. Therefore, the amount of contrast agent to be injected to the body can be substantially reduced.

## Claims

### Claims for the following Contracting States : FR, GB, NL

1. An X-ray image producing system comprising: means (11) for producing a beam of X-rays to irradiate an object (12) to be examined; means (13) for producing an X-ray shadow image of said object (12) caused by said X-rays that have passed through said object (12); means (14) for converting said X-ray image to a corresponding analog video signal; means (23) for digitizing said analog video signal; means for forming a mask image by processing the values of said digital video signal obtained during a predetermined period of time in each of the picture elements of said X-ray image produced before injection of contrast material into said object (12), memory means (26M) for storing said mask image; means for forming a live image by processing the values of said digital video signal obtained during a predetermined period of time in each of the picture elements of said X-ray image produced after injection of contrast material into said object (12); memory means (26L) for storing said live image; means (40) for subtracting the digital video signals of said mask image from the digital video signals of said live image; memory means (41) for storing said subtraction image; means (27) for converting the digital video signal resulting from said subtraction to a corresponding analog video signal; and means (16) for displaying said converted analog video signal as a subtraction image; characterized by means (25) for comparing repeatedly for plural successive frames of said X-ray shadow image in each of the picture elements the level of said digital video signal stored in said mask image memory means (26M) and the level of a succeeding digital video signal from said converting means (15, 23) which forms a succeeding frame before injection of contrast material into said object, and causing either the higher or lower one of said video signals to be stored in each of the memory sections of said mask image storing means (26M) corresponding to said picture elements in place of the data previously recorded therein and the said means (25) also comparing repeatedly for plural successive frames of said X-ray shadow image in each of the picture elements the level of said digital video signal stored in said live image memory means (26L) and the level of a succeeding digital video signal from said converting means (15, 23) which forms a succeeeding frame after injection of contrast material into said object, and causing either the higher or lower one of said video signals to be stored in each of the memory sections of said live image storing means (26L) corresponding to said picture elements in place of the data previously recorded therein.

2. The system of claim 1, wherein said live image forming means (25, 26L) operates so as to produce a new live image at predetermined time intervals.

**Claims for the following Contracting State : DE**

1. X-ray image producing apparatus comprising: means (11) for producing a beam of X-rays to irradiate an object (12) to be examined; means (13) for producing an X-ray shadow image of said object (12) caused by said X-rays that have passed through said object (12); means (14) for converting said X-ray shadow image to a corresponding analog video signal; means (23) for converting said analog video signal to a corresponding digital video signal; memory means (26) for storing the level of said digital video signal in each of the picture elements which constitute an image frame; means (27) for converting said stored digital video signal to a corresponding analog video signal; and means (16) for displaying the image formed by said analog video signal; characterized by: means (25) for comparing repeatedly for plural successive frames of said X-ray shadow image in each of said picture elements the level of said digital video signal stored in said storing means (26) and the level of a succeeding digital video signal from said converting means (14, 23) which forms a frame succeeding the frame formed by said stored digital video signal and causing the signal with either the higher or lower value to be stored in each of the memory sections of said storing means (26) corresponding to said picture elements in place of the data previously recorded therein.

2. The system of claim 1, wherein said X-ray shadow image producing means (13) comprises an X-ray image intensifier.

3. The system of claim 1, wherein said converting means (14) comprises a TV camera.

4. The system of claim 1, further including a TV monitor (16) for displaying the image formed by said video signal from said comparing means (25).

5. An X-ray image producing system comprising: means (11) for producing a beam of X-rays to irradiate an object (12) to be examined; means (13) for producing an X-ray shadow image of said object (12) caused -by said X-rays that have passed through said object (12); means (14) for converting said X-ray image to a corresponding analog video signal; means (23) for digitizing said analog video signal; means for forming a mask image by processing the values of said digital video signal obtained during a predetermined period of time in each of the picture elements of said X-ray image produced before injection of contrast material into said object (12), memory means (26M) for storing said mask image; means for forming a live image by processing the values of said digital video signal obtained during a predetermined period of time in each of the picture elements of said X-ray image produced after injection of contrast material into said object (12); memory means (26L) for storing said live image; means (40) for subtracting the digital video signals of said mask image from the digital video signals of said live image; memory means (41) for storing said subtraction image; means (27) for converting the digital video signal resulting from said subtraction to a corresponding analog video signal; and means (16) for displaying said converted analog video signal as a subtraction image; characterized by means (25) for comparing repeatedly for plural successive frames of said X-ray shadow image in each of the picture elements the level of said digital video signal stored in said mask image memory means (26M) and the level of a succeeding digital video signal from said converting means (15,23) which forms a succeeding frame before injection of contrast material into said object, and causing either the higher or lower one of said video signals to be stored in each of the memory sections of said mask image storing means (26M) corresponding to said picture elements in place of the data previously recorded therein and the said means (25) also comparing repeatedly for plural successive frames of said X-ray shadow image in each of the picture elements the level of said digital video signal stored in said live image memory means (26L) and the level of a succeeding digital video signal from said converting means (15, 23) which forms a succeeding frame after injection of contrast material into said object, and causing either the higher or lower one of said video signals to be stored in each of the memory sections of said live image storing means (26L) corresponding to said picture elements in place of the data previously recorded therein.

6. The system of claim 5, wherein said live image forming means (25, 26L) operates so as to produce a new live image at predetermined time intervals.

**Patentansprüche**

**Patentansprüche für folgende Vertragsstaaten : FR, GB, NL**

1. Röntgenstrahlen-Bilderzeugungsgerät mit einer Vorrichtung (11) zum Erzeugen einer Röntgenstrahlung für die Bestrahlung eines zu untersuchenden Gegenstandes (12), einer Vorrichtung (13) zum Erzeugen eines Röntgen-Schattenbildes des Gegenstands (12) mittels der durch den Gegenstand (12) hindurchgetretenen Röntgenstrahlen, einer Umsetzvorrichtung (14) zum Umsetzen des Röntgenbildes in ein entsprechendes analoges Videosignal, einer Umsetzvorrichtung (23) zum Digitalisieren des analogen Videosignals, einer Vorrichtung zum Erzeugen eines Maskenbildes durch Verarbeitung der Daten des digitalen Videosignals, das während einer vorbestimmten Zeitdauer von jedem Bildpunkt des vor Einspritzen eines Kontrastmittels in den Gegenstand (12) erzeugten Röntgenbildes erhalten wird, einer Speichereinrichtung (26M) zum Speichern des Maskenbildes, einer Vorrichtung zum Erzeugen eines Direktbildes durch Verarbeitung der Daten des digitalen Videosignals, das während einer vorbestimmten Zeitdauer von jedem Bildpunkt des nach Einspritzen eines Kontrastmittels in den Gegenstand (12) erzeugten Röntgenbildes erhalten wird, einer Speichereinrichtung (26L) zum Speichern des Direktbildes, einer Subtraktionsvorrichtung (40) zum Subtrahieren des digitalen Videosignals des Maskenbildes von dem digitalen Videosignal des Direktbildes, einer Speichereinheit (41) zum Speichern des Subtraktionsbildes, einer Umsetzeinheit (27) zum Umsetzen des aus der Subtraktion erhaltenen digitalen Videosignals in ein entsprechendes analoges Videosignal, und einer Anzeigevorrichtung (16) zur Anzeige des umgesetzten analogen Videosignals als Subtraktionsbild, **gekennzeichnet durch** eine Vergleichsvorrichtung (25), die wiederholt für mehrere aufeinanderfolgende Einzelbilder des Röntgen-Schattenbildes den Pegel jedes Bildpunktes des in der Speichereinrichtung (26M) für das Maskenbild gespeicherten digitalen Videosignals mit dem Pegel eines nachfolgenden digitalen Videosignals der Umsetzvorrichtung (15, 23), die ein nachfolgendes Bild vor Einspritzen eines Kontrastmittels in den Gegenstand erzeugt, wobei die Vergleichsvorrichtung bewirkt, daß entweder das höhere oder niedrigere Videosignal in jedem Speicherbereich der Speichereinrichtung (26M) für das Maskenbild entsprechend den Bildpunkten anstelle der vorher darin aufgezeichneten Daten gespeichert wird, und ferner wiederholt für mehrere aufeinanderfolgende Einzelbilder des Röntgen-Schattenbildes den Pegel jedes Bildpunktes des in der Speichervorrichtung (26L) für das Direktbild gespeicherten digitalen Videosignals mit dem Pegel eines nachfolgenden digitalen Videosignals aus der Umsetzvorrichtung (15, 23) vergleicht, sowie ein nachfolgendes Bild nach Einspritzen eines Kontrastmittels in den Gegensand erzeugt und bewirkt, daß entweder das höhere oder niedrigere Videosignal in jedem Speicherbereich der Speichereinrichtung (26L) für das Direktbild entsprechend den Bildpunkten anstelle der vorher darin aufgezeichneten Daten gespeichert wird.

2. Vorrichtung nach Anspruch 1, **dadurch gekennzeichnet**, daß die Direktbild-Erzeugungsvorrichtung (25, 26L) ein neues Direktbild zu vorbestimmten Zeitintervallen erzeugt. Deutschsprachige Übersetzung der Patentansprüche der Europäischen Patentanmeldung Nr. 83 108 391.0 des Europäischen Patents Nr. 0 102 592

**Patentansprüche für folgenden Vertragsstaat : DE**

1. Röntgenstrahlen-Bilderzeugungsgerät mit einer Vorrichtung (11) für eine Röntgenstrahlenerzeugung zum Bestrahlen eines zu untersuchenden Gegenstandes (12), einer Vorrichtung (13) zum Erzeugen eines Röntgen-Schattenbildes des Gegenstandes (12) mittels der durch den Gegenstand (12) hindurchgetretenen Röntgenstrahlen, einer Umsetzvorrichtung (14) zum Umsetzen des Röntgenschattenbildes in ein entsprechendes analoges Videosignal, einer Umsetzvorrichtung (23) zum Umsetzen des analogen Videosignals in ein entsprechendes digitales Videosignal, einer Speichereinrichtung (26) zum Speichern des Pegels des digitalen Videosignals jedes der das Bild zusammensetzenden Bildpunkte, einer Vorrichtung (27) zum Umsetzen des gespeicherten digitalen Videosignals in ein entsprechendes analoges Videosignal, und einer Anzeigevorrichtung (16) zum Anzeigen des durch das analoge Videosignal dargestellten Bildes, **gekennzeichnet durch** eine Vergleichsvorrichtung (25), die wiederholt für mehrere aufeinanderfolgende Einzelbilder des Röntgen-Schattenbildes den Pegel jedes Bildpunktes des in der Speichereinrichtung (26) gespeicherten digitalen Videosignals mit dem Pegel eines darauffolgenden digitalen Videosignals der Umsetzvorrichtung (14, 23) vergleicht, die ein Bild erzeugt, das dem durch das gespeicherte digitale Videosignal dargestellten Bild folgt, wobei die Vergleichsvorrichtung bewirkt, daß entweder das Signal mit dem höheren oder mit dem niedrigeren Wert in jedem Speicherbereich der Speichereinrichtung (26) entsprechend den Bildpunkten anstelle der darin vorhergehend aufgezeichneten Daten gespeichert wird.

2. Gerät nach Anspruch 1, dadurch gekennzeichnet, daß die Vorrichtung (13) zum Erzeugen eines Röntgenschattenbildes einen Röntgenbildverstärker aufweist.

3. Gerät nach Anspruch 1, dadurch gekennzeichnet, daß die Umsetzvorrichtung (14) eine Fernsehkamera aufweist.

4. Gerät nach Anspruch 1, gekennzeichnet durch einen Fernsehmonitor (16) zur Anzeige des von dem Videosignal der Vergleichsvorrichtung (25) dargestellten Bildes.

5. Röntgenstrahlen-Bilderzeugungsvorrichtung mit einer Vorrichtung (11) zum Erzeugen einer Röntgenstrahlung für die Bestrahlung eines zu untersuchenden Gegenstandes (12), einer Vorrichtung (13) zum Erzeugen eines Röntgen-Schattenbildes des Gegenstandes (12) mittels der durch den Gegenstand (12) hindurchgetretenen Röntgenstrahlen, einer Umsetzvorrichtung (14) zum Umsetzen des Röntgenbildes in ein entsprechendes analoges Videosignal, einer Umsetzvorrichtung (23) zum Digitalisieren des analogen Videosignals, einer Vorrichtung zum Erzeugen eines Maskenbildes durch Verarbeitung der Daten des digitalen Videosignals, das während einer vorbestimmten Zeitdauer von jedem Bildpunkt des vor Einspritzen eines Kontrastmittels in den Gegenstand (12) erzeugten Röntgenbildes erhalten wird, einer Speichereinrichtung (26M) zum Speichern des Maskenbildes, einer Vorrichtung zum Erzeugen eines Direktbildes durch Verarbeitung der Daten des digitalen Videosignals, das während einer vorbestimmten Zeitdauer von jedem Bildpunkt des nach einer Einspritzung des Kontrastmittels erzeugten Röntgenbildes erhalten wird, einer Speichereinrichtung (26L) zum Speichern des Direktbildes, einer Subtraktionsvorrichtung (40) zum Subtrahieren des digitalen Videosignals des Maskenbildes von dem digitalen Videosignal des Direktbildes, einer Speichereinheit (41) zum Speichern des Subtraktionsbildes, einer Umsetzeinheit (27) zum Umsetzen des aus der Subtraktion erhaltenen digitalen Videosignals in ein entsprechendes analoges Videosignal, und einer Anzeigevorrichtung (16) zur Anzeige des umgesetzten analogen Videosignals als Subtraktionsbild, **gekennzeichnet durch** eine Vergleichsvorrichtung (25), die wiederholt für mehrere aufeinanderfolgende Einzelbilder des Röntgen-Schattenbildes den Pegel jedes Bildpunktes des in der Speichereinrichtung (26M) für das Maskenbild gespeicherten digitalen Videosignals mit dem Pegel eines darauffolgenden digitalen Videosignals der Umsetzvorrichtung (15, 23) vergleicht, die ein nachfolgendes Bild vor der Einspritzung von Kontrastmittel in den Gegenstand erzeugt, wobei die Vergleichsvorrichtung bewirkt, daß entweder das höhere oder niedrigere Videosignal in jedem Speicherbereich der Speichereinrichtung (26M) für das Maskenbild entsprechend den Bildpunkten anstelle der vorher darin aufgezeichneten Daten gespeichert wird, und ferner wiederholt für mehrere aufeinanderfolgende Einzelbilder des Röntgen-Schattenbildes den Pegel jedes Bildpunktes des in der Speichereinrichtung (26L) für das Direktbild gespeicherten digitalen Videosignals mit dem Pegel eines nachfolgenden digitalen Videosignals aus der Umsetzvorrichtung (15, 23) vergleicht, sowie ein nachfolgendes Bild nach dem Einspritzen des Kontrastmittels in den Gegenstand erzeugt und bewirkt, daß entweder das höhere oder niedrigere Videosignal in den Speicherbereichen der Speichereinrichtung (26L) für das Direktbild entsprechend den Bildpunkten anstelle der vorher darin aufgezeichneten Daten gespeichert wird.

6. Vorrichtung nach Anspruch 5, **dadurch gekennzeichnet**, daß die Direktbild-Erzeugungsvorrichtung (25, 26L) ein neues Direktbild zu vorbestimmten Zeitintervallen erzeugt.

## Revendications

### Revendications pour les Etats contractants suivants : FR, GB, NL

1. Système de production d'images radiographiques, comprenant : des moyens (11) pour produire un faisceau de rayons X pour irradier un objet (12) à examiner ; des moyens (13) pour produire une image radiographique dudit objet (12) produite par les rayons X qui ont traversé l'objet (12) ; des moyens (14) pour convertir l'image radiographique en un signal vidéo analogique correspondant ; des moyens (23) pour numériser le signal vidéo analogique ; des moyens pour former une image de masquage en traitant les valeurs du signal vidéo numérique obtenu pendant une période de temps prédéterminée dans chacun des éléments de l'image radiographique produite avant injection de matière de contraste dans l'objet (12), des moyens de mémorisation (26M) pour mémoriser l'image de masquage ; des moyens pour former une image vive en traitant les valeurs du signal vidéo numérique obtenu pendant une période de temps prédéterminée dans chacun des éléments de l'image radiographique produite après injection de matière de contraste dans l'objet (12) ; des moyens de mémorisation (26L) pour mémoriser l'image vive ; des moyens (40) pour soustraire les signaux vidéo numériques de l'image de masquage des signaux vidéo numériques de l'image vive ; des moyens de mémorisation (41) pour mémoriser l'image de soustraction ; des moyens (27) pour convertir le signal vidéo numérique résultant de la soustraction en un signal vidéo analogique correspondant ; et des moyens (16) pour afficher le signal vidéo analogique converti sous forme d'image de soustraction ; caractérisé par des moyens (25) pour comparer de manière répétitive pour plusieurs images complètes successives de ladite image radiographique, dans chacun des éléments d'image, le niveau du signal vidéo numérique dans les moyens de mémorisation d'image de masquage (26M) et le niveau d'un signal vidéo numérique subséquent provenant des moyens de conversion (15, 23) qui forment une image complète subséquente avant l'injection de matière de contraste dans ledit objet, et provoquant la mémorisation du signal vidéo le plus haut ou du signal vidéo le plus bas dans chacune des sections de mémoire des moyens de mémorisation d'image de masquage (26M) correspondant aux éléments d'image à la place des données qui y avaient été enregistrées précédemment, et les moyens (25) comparant également de manière répétitive pour plusieurs images complètes successives de ladite image radiographique, dans chacun des éléments d'image, le niveau du signal vidéo numérique mémorisé dans les moyens de mémorisation d'image vive (26L) et le niveau d'un signal vidéo numérique subséquent provenant des moyens de conversion (15, 23) qui forment une image complète subséquente après injection de matière de contraste dans l'objet, et provoquant la mémorisation du signal vidéo le plus haut ou du signal vidéo le plus bas dans chacune des section de mémoire des moyens de mémorisation d'image vive (26L) correspondant aux éléments d'image, à la place des données qui y avaient été enregistrées précédemment.

2. Système selon la revendication 1, caractérisé en ce que les moyens de formation d'image vive (25, 26) fonctionnent de façon à produire une nouvelle image vive à des intervalles de temps prédéterminés.

### Revendications pour l'Etat contractant suivant : DE

1. Appareil de production d'images radiograhiques, comprenant: des moyens (11) pour produire un faisceau de rayons X pour irradier un objet (12) à examiner; des moyens (13) pour produire une image radiographique de l'objet (12) produites par les rayons X qui ont traversé l'objet (12) ; des moyens (14) pour convertir l'image radiographique en un signal vidéo analogique correspondant; des moyens (23) pour convertir le signal vidéo analogique en un signal vidéo numérique correspondant; des moyens de mémorisation (26) pour mémoriser le niveau du signal vidéo numérique dans chacun des éléments d'image qui constituent une "image", complète des moyens (27) pour convertir le signal vidéo numérique mémorisé en un signal vidéo analogique correspondant, et des moyens (16) pour afficher l'image formée par le signal vidéo analogique, caractérisé par: des moyens (25) pour comparer de manière répétitive pour plusieurs images complètes successives de ladite image radiographique dans chacun des éléments d'image, le niveau du signal vidéo numérique mémorisé dans les moyens de mémorisation (26) et le niveau d'un signal vidéo numérique subséquent en provenance des moyens de conversion (14, 23) qui forment une image complète succédant à l'image complète formée par le signal vidéo numérique mémorisé et provoquant la mémorisation du signal de la valeur la plus élevée ou la plus basse dans chacune des sections de mémoire des moyens de mémorisation (26) correspondant aux éléments d'image, au lieu des données qui y avaient été mémorisées précédemment.

2. Système selon la revendication 1, caractérisé en ce que lesdits moyens de production d'image radiographique (13) comprennent un renforçateur d'image radiographique.

3. Système selon la revendications 1, caractérisé en ce que les moyens de conversion (14) comprennent une caméra de télévision.

4. Système selon la revendication 1, caractérisé en ce qu'il comprend, en outre, un moniteur de télévision (16) pour afficher l'image formée par le signal vidéo à partir desdits moyens de comparaison (25).

5. Système de production d'images radiographiques, comprenant : des moyens (11) pour produire un faisceau de rayons X pour irradier un objet (12) à examiner; des moyens (13) pour produire une image radiographique de l'objet (12) produite par les rayons X qui ont traversé l'objet (12), des moyens (14) pour convertir l'image radiographique en un signal vidéo analogique correspondant: des moyens (23) pour numériser le signal vidéo analogique; des moyens pour former une image de masquage en traitant les valeurs du signal vidéo numérique obtenu au cours d'une période de temps prédéterminée dans chacun des éléments de l'image radiographique produite avant injection d'une matière de contraste dans l'objet (12); des moyens de mémorisation (26M) pour mémoriser l'image de masquage; des moyens pour former une image vive en traitant les valeurs du signal vidéo numérique obtenu pendant une periode de temps prédéterminée dans chacun des éléments de l'image radiographique produite après injection de la matière de contraste dans l'objet (12) ; des moyens de mémorisation (26L) pour mémoriser l'image vive; des moyens (40) pour soustraire les signaux vidéo numériques de l'image de masquage des signaux vidéo numériques de l'image vive; des moyens de mémorisation (41) pour mémoriser l'image de soustraction; des moyens (27) pour convertir le signal vidéo numérique résultant de la soustraction en un signal vidéo analogique correspondant; et des moyens (16) pour afficher le signal vidéo analogique converti sous forme d'image de soustraction; caractérisé par des moyens (25) pour comparer de manière répétitive pour plusieurs images complètes successives de ladite image radiographique dans chacun des éléments d'image, le niveau du signal vidéo numérique mémorisé dans les moyens de mémorisation d'images de masquage (26M) et le niveau d'un signal vidéo numérique subséquent provenant des moyens de conversion (15, 23) qui forment une image complète subséquente avant injection de la matière de contraste dans l'objet, et provoquant la mémorisation du signal le plus élevé ou du signal le plus bas dans chacune des sections de mémoire des moyens de mémorisation d'image de masquage (26M) correspondant aux éléments d'image à la place des données précédemment enregistrées dans celle-ci et les moyens (25) comparant également de manière répétitive pour plusieurs images complètes successives de ladite image radiographique dans chacun des éléments d'image, le niveau du signal vidéo numérique mémorisé dans les moyens de mémorisation d'image vive (26L) et le niveau d'un signal vidéo numérique subséquent provenant desdits moyens de conversion (15, 23) qui forment une image complète subséquente après injection de matière de contraste dans ledit objet, et provoquant la mémorisation du signal vidéo le plus haut ou du signal vidéo le plus bas dans chacune des sections de mémoire des moyens de mémorisation d'image vive (26L) correspondant aux éléments d'image, au lieu des données qui y avaient été précédemment enregistrées.

6. Système selon la revendication 5, caractérisé en ce que lesdits moyens de formation d'image vive (25, 26L) fonctionnent de façon à produire une nouvelle image vive à des intervalles de temps prédéterminés.

Fig.1

X-RAY GENERATOR — 11

12

X-RAY IMAGE INTEN-SIFIER — 13

TV CAMERA — 14

CAMERA CONTROL UNIT — 15

TV MONITOR — 16

20

L

21

A/D CONVERTER — 23

+V_CC

24

COMPARATOR — 25

D/A CONVERTER — 27

22

FRAME MEMORY — 26

SEQUENCE CONTROLLER — 28

EP 0 102 592 B2

Fig. 2

Fig.3